# EUROPEAN PATENT APPLICATION

(11) **EP 1 209 864 A2**
(43) Date of publication of application: **29.05.2002**
(21) Application number: 01402687.6
(22) Date of filing: 18.10.2001
(51) Int. Cl.: H04L 12/56, H04Q 11/04

(54) **System and method for providing multiple quality of service levels over a single asynchronous transfer mode (ATM) virtual communications channel**

(30) Priority: 24.10.2000 US 696337
(71) Applicant: SAGEM S.A., 75015 Paris (FR)
(72) Inventor: Le Gourrierec, Marc, 77600 Bussy-St-Georges (FR)
(74) Representative: Fruchard, Guy

(57) **Abstract**

A method and system provide multiple quality of service (QOS) levels over a single asynchronous transfer mode (ATM) virtual communications channel. A priority level is assigned to each frame to be communicated over the ATM virtual communications channel. Each assigned priority level defines the QOS level of the corresponding frame. The priority levels of the frames to be communicated are monitored, and each frame is adapted into a corresponding sequence of ATM cells. The frames are adapted according to the assigned priority levels of the frames. The adaptation of particular frames is interrupted according to the monitored priority levels, and the adaptation of interrupted frames is resumed according to the monitored priority levels. An indication is provided of when the adaptation of any frame has been interrupted and resumed. The ATM cells are communicated over the ATM virtual communications channel according to the order the cells are adapted. The communicated ATM cells are reassembled into the corresponding frames using the provided indications of when the adaptation of particular frames has been interrupted and resumed to thereby reassemble the frames according to the assigned priority levels of the frames and in this way achieve the desired QOS levels of the frames.

## Description

The present invention relates generally to communications systems, and more specifically to a method and system for communicating information in an Asynchronous Transfer Mode ("ATM") communications network.

Today's global communications network, which includes the Internet and World Wide Web, is utilized by millions of individuals and businesses to access myriad types of information and to communicate with other users. In addition, other communications networks, such as telecommunications networks, utilize the global communications network to transfer information. While data may be transferred among different communications networks, different networks may utilize different communications protocols, thus necessitating that a message being transmitted on a first network in a first protocol be converted or adapted to a second protocol of a second network before being transmitted over that network. For example, the communications protocol utilized on the Internet is typically the Transmission Control Protocol/Internet Protocol ("TCP/IP") while many telecommunications networks utilize the Asynchronous Transfer Mode ("ATM") protocol. Before a message formatted in the TCP/IP protocol can be communicated over a network utilizing the ATM protocol, the message must first be adapted to the ATM protocol.

In communications networks, a network term known as the Quality of Service ("QOS") specifies a guaranteed throughput level for a particular communications channel, where throughput is the amount of data transferred from one place to another in a specified amount of time, as will be understood by those skilled in the art. When messages are adapted between or among network protocols, the QOS level of the message data may be adversely affected. Different types of data require different QOS levels. For example, when transferring voice data in real time over a communications channel the QOS level must be sufficient to ensure that users at both ends of the channel perceive a high-quality audio message. If the QOS level is insufficient, the users will perceive this as a distorted audio message. The same is true of video data, which requires a much greater QOS level than does voice data. In contrast to voice and video data, when transferring file data a lower QOS level is typically acceptable. In the following description, the term QOS level may be used interchangeabley to apply to a particular communications channel or the data being transferred over that channel.

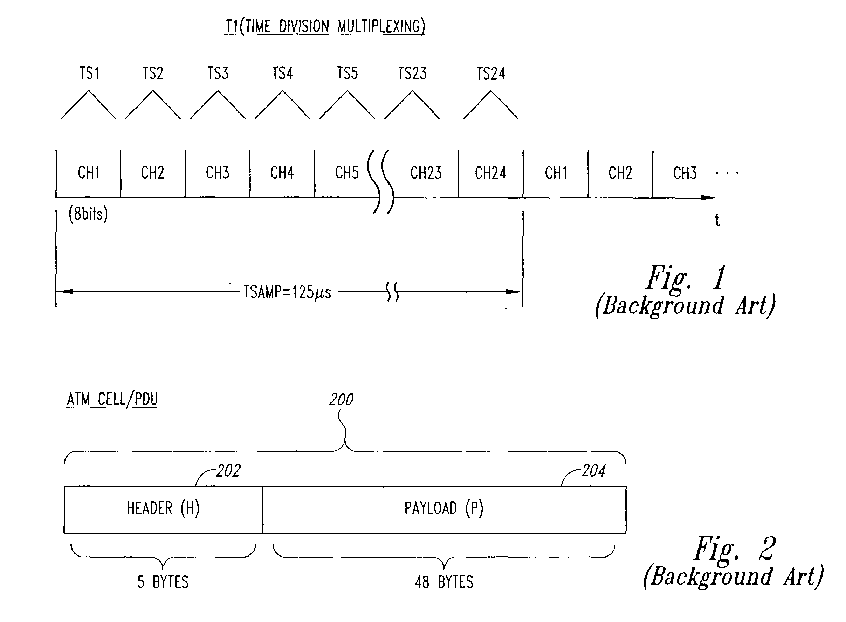

The QOS concept will now be described in more detail with reference to Figures 1-4. Figure 1 is a diagram illustrating the time-division multiplexing ("TDM") of data signals for a plurality of voice data channels CH1-CH24 in a conventional T1 digital voice transmission network. The T1 network is a digital network, meaning that an analog electrical signal corresponding to a voice has been digitized by sampling the analog electrical signal. Each sample has a eight bits that correspond to the sampled value of the analog electrical signal at the time the sample was taken. One skilled in the art will understand the concepts of sampling and the digital representation of an analog signal, and thus, for the sake of brevity, these concepts will not be discussed in further detail. In the T1 network, each of the 24 voice channels CH1-CH24 is allocated a corresponding time slot TS1-TS24, respectively, during which the eight bits corresponding to the sample for the channel are transmitted. The samples for each channel CH1-CH24 are sequentially transmitted during the time slots TS1-TS24, respectively. Thus, each of the channels CH1-CH 24 has its sample transmitted during a portion of the time it takes to transmit the samples for all channels.

As will be understood by those skilled in the art, a conventional voice band channel is defined as having a bandwidth of approximately 4 kHz and is sampled at a rate of 8 kHz to satisfy the Nyquist sampling criterion. The 8 kHz sampling rate corresponds to a sampling time TSAMP of 125 microseconds. Thus, each channel CH1-CH24 is sampled every 125 microseconds and consecutive samples for each channel are transmitted in the corresponding time slot TS1-TS24 every 125 microseconds to thereby transmit the digitized voice signal in real time. For example, in Figure 1 the first sample for channel CH1 is transmitted during the time slot TS1 and a second sample for channel CH1 is transmitted immediately after the time slot TS24. Thus, in the T1 network eight bits for each channel are transmitted every 125 microseconds which corresponds to a transfer rate of 64 kbps. There are 24 channels CH1-CH24 being transmitted every 125 microseconds, which corresponds to an overall data transfer rate of approximately 1.544 Mbps (24 x 64 kbps) for the T1 network.

In the time division multiplexing T1 network, each channel CH1-CH24 has a constant data transfer rate of 64 kbps. The constant data transfer rate of each T1 channel CH1-CH24 is good for transmitting voice data, which will consist of consecutive samples during the entire duration of the phone call. This constant data transfer rate is not as suitable, however, for transmitting other types of data such as file data. This is true because when transferring file data, typically a high data transfer rate is desired when an actual file is being transferred while relatively little or no data transfer rate is needed when no file data is being transferred. Thus, with a constant data rate being assigned to each channel, data throughput is wasted on channels transferring file data when no such file data is being transferred.

For a communications protocol to more efficiently transfer all of voice, video, and file data, which will collectively be referred to as multimedia data, the protocol must allow for a variable data rate per channel. One such communications protocol is the Asynchronous Transfer Mode ("ATM") protocol that was designed to provide for the efficient communication of multimedia data over a single communications link. The ATM protocol allows for variable data transfer rates among channels thereby allowing the data transfer rate for each channel to be selected according to the type of data to be transferred by that channel. For example, a first channel that carries voice data may be configured to have a data transfer rate 64 kbps while a second channel that transfers video data may have its data transfer rate set at a much higher rate, and a third channel that transfers file data may have its data transfer rate set at relatively high rate with this rate being utilized only when file data is being transferred. As will be described in more detail below, although the ATM protocol allows for variable data rates among channels, such variable data rates may adversely affect the desired QOS levels of data being transmitted over the same communications channel. A variety of different physical layers may be utilized to implement the ATM protocol, such as the Synchronous Optical Network ("SONET"), which is an optical-based communications network, as will be understood by those skilled in the art.

The ATM protocol segments data to be transferred into fixed length packets or protocol data units ("PDU") known as cells 200 as illustrated in Figure 2, each cell including a 5 byte header 202 and a 43 byte payload 204. The payload 204 of the ATM cell 200 contains the data being communicated and the header 202 includes a variety of control and addressing information. The header 202 includes an error control field, virtual path identifier ("VPI") and virtual channel identifier ("VCI") fields that identify the particular connection over which the cell is to be communicated, and a payload type indicator ("PTI") field that is utilized to identify the channel over which the ATM cell is being communicated. The header 202 also includes other control and addressing fields as will be understood by those skilled in the art. The VPI and VCI fields collectively defined a particular connection over which the cell is to be communicated, and for ease of explanation will hereinafter be referred to simply as the ATM channel. The ATM channel is defined by 24 bits in the header 202, thereby enabling over 16 million different ATM channels to be defined.

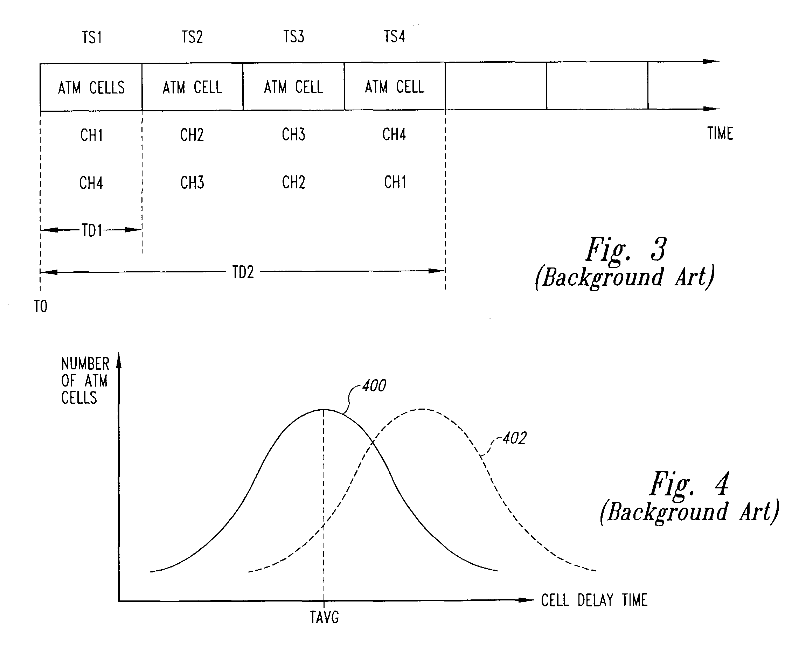

Although the ATM protocol allows such a large number of channels to be communicated, the QOS level of a particular channel may be affected by other channels when a number of channels want to communicate simultaneously. For example, Figure 3 is a diagram illustrating the variable time delays experienced by an ATM channel CH1 depending on the time slot TS1-TS4 in which the ATM cells for channel CH 1 are communicated. Assume that a time T0 each of the channels CH1-CH4 wants to transmit an ATM cell over the same ATM channel. If the ATM cell for channel CH1 is communicated during a first time slot TS1, the time it takes to communicate that ATM cell corresponds to a delay time TD1. If the ATM cell for channel CH 1 is not communicated until a fourth time slot TS4, however, the time it takes to communicate that ATM cell corresponds to a delay time TD2 that is much longer than the delay time TD1. Such variations in the delay time to communicate an ATM cell will of course affect the QOS of the ATM channel. Figure 4 is a graph illustrating a normal distribution 400 of the number of ATM cells received on a particular ATM channel versus the delay time for receiving the cells. The peak of the normal distribution 400 equals the average delay time TAVG, which corresponds to the fixed delay time for a time division multiplexed system such as the previously described T1 network. To maintain a desired QOS level, ATM cells being communicated over a particular channel must exhibit the distribution 400 shown in Figure 4 where TAVG has the desired value. If the average delay time TAVG is longer, such as for a distribution 402 indicated by the dotted line, then the ATM channel will have a lower QOS level.

The ATM protocol may be utilized in a variety of different applications and is utilized in many telecommunication networks. In today's global economy, data must be transferred around the globe, many times passing through numerous communications networks in route from the source of the data to the recipient of the data. As previously mentioned, different networks utilize different communications protocols, thus necessitating that a message being transmitted on a first network in a first protocol be converted or adapted to a second protocol of a second network before being transmitted over the second network. For example, the communications protocol utilized on the Internet is typically the Transmission Control Protocol/Internet Protocol ("TCP/IP"). Before a message formatted in the TCP/IP protocol can be communicated over a network utilizing the ATM protocol, the message must first be adapted to the ATM protocol and then transmitted. Similarly, after the message is received it must once again be adapted to the TCP/IP protocol.

A message in a particular transmission protocol, such as TCP/IP, is adapted to the ATM protocol through an ATM Adaptation Layer ("AAL"), which is a standard layer in the ATM protocol. The AAL adapts a non-ATM message format at a transmitter to the cell-based ATM protocol, and thereafter adapts the ATM cells at the receiver back to the non-ATM message format. A number of AAL's have been defined, each AAL being designed to handle a particular type of data to be communicated over an ATM network. An AAL designated as "AAL5" has been developed to provide for transporting upper layer protocols, such as TCP/IP, over an ATM network. In other words, the AAL5 adapts a message in the TCP/IP format at the transmitter into the ATM cell format, and at the receiver adapts the ATM cell format back into the TCP/IP format.

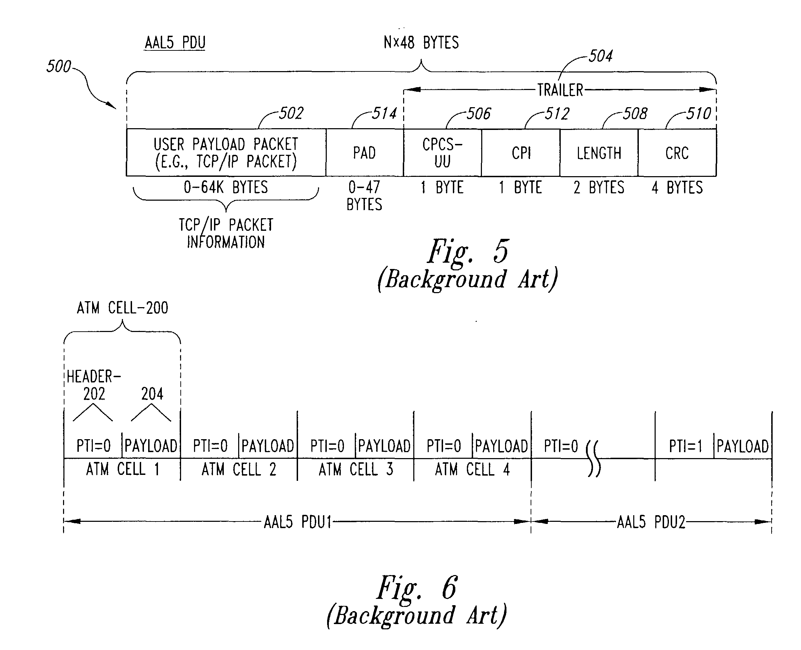

Figure 5 is a diagram illustrating a conventional AAL5 packet or protocol data unit (PDU) 500 that is formed by the AAL5 layer from a user payload packet 502, such as a TCP/IP packet or other non-ATM packet. The AAL5 layer adds to the user payload packet 502 an 8 byte trailer 504 containing a number of control, error detection, and address fields. More specifically, the trailer 504 includes a common part convergence sublayer user-to-user ("CPCS-UU") field 506 and a common part indicator ("CPI") field 512 that are reserved for future use and have not been defined in the current version of the AAL5 layer. The trailer 504 also includes a 2 byte length field 508 that defines the length of the user payload packet 502 and a 4 byte cyclical redundancy check ("CRC") field 510 that is utilized in detecting errors in the user payload packet. In addition to the trailer 504, the AAL5 layer also adds a PAD field 514 containing 0-47 bytes of "padding" data, which are bytes of data added merely to make the length of the AAL5 protocol data unit 500 an integer multiple of 48 bytes. As previously discussed, the payload field in an ATM cell is 48 bytes and thus the length of the AAL5 protocol data unit 500 must be an integer multiple of 48 bytes so that it may be placed in an integer number of ATM cells.

Once the AAL5 layer has generated the AAL5 PDU 500 from a user payload packet 502, the AAL5 PDU is then communicated over the ATM network as a sequence of conventional ATM cells 200 (see Figure 2), each ATM cell including 48 bytes of the AAL5 PDU as its payload field 204 and the conventional 5 byte ATM cell header 202. On the receiving end of the ATM channel, the AAL5 layer must have a way of determining which ATM cells 200 belong to a particular AAL5 PDU 500. Figure 6 is a diagram illustrating the process executed by the AAL5 layer to detect the end of a first protocol data unit AAL5 PDU1 and the start of a second protocol data unit AAL5 PDU2. As previously discussed, each ATM cell header 202 (Figure 2) contains a payload type indicator ("PTI") field that defines the type of payload 204 contained in the ATM cell. The AAL5 layer utilizes the PTI field to detect the end of the first AAL5 PDU1 and the start of the second AAL5 PDU2. For all ATM cells belonging to AAL5 PDU1, the corresponding PTI field in each cell header is set equal to 0, except for the PTI field in the last ATM cell. In the last ATM cell belonging to a particular AAL5 PDU, the PTI field is set equal to 1. In the example of Figure 6, the AAL5 PDU1 contains four ATM cells and in the fourth ATM cell the PTI field is set equal to 1. Thus, to detect the termination of ATM cells belonging to the first AAL5 PDU1, the AAL5 layer monitors the PTI field of received ATM cells and as long as the PTI field is equal to 0 the AAL5 layer determines that the ATM cell belongs to the AAL5 PDU1. When the fourth ATM cell of the AAL5 PDU1 is received, the AAL5 layer determines that the PTI field equals 1, indicating the corresponding ATM cell is the last cell belonging to the AAL5 PDU1. Once the AAL5 layer detects the last ATM cell of the AAL5 PDU1, it determines the next ATM cell that is received belongs to the AAL5 PDU2, and once again continues monitoring the PTI field of successive ATM cells received to thereby detect the termination of the second AAL5 PDU2.

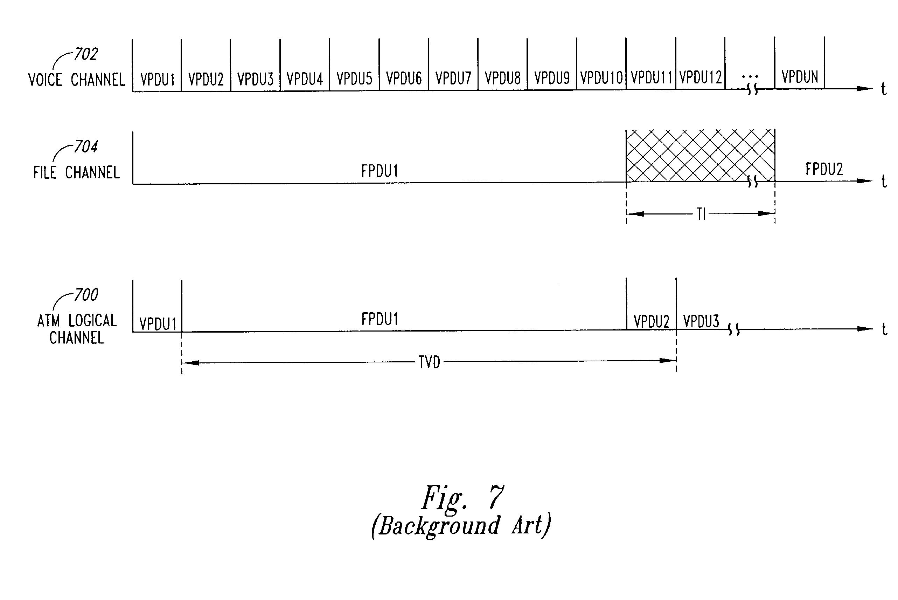

Figure 7 is a diagram illustrating a single logical ATM channel 700 over which a voice ATM channel 702 transfers voice data and a file ATM channel 704 transfers file data, and showing how the transfer of both data types may affect the QOS level of the voice data. The voice data being transferred over the voice channel 702 is illustrated as a series of AAL5 PDUs designated VPDU1-VPDUN. Similarly, the file data being transferred over the file channel 704 is illustrated as a first AAL5 PDU designated FPDU1, followed by an idle period TI during which no file data is transferred, and a second AAL5 PDU designated FPDU2 being transferred after the idle period. The voice protocol data units VPDU1-VPDUN are illustrated as being much smaller than the file protocol data units FPDU1 and FPDU2, which is typically true due to the nature of the data being transferred over the respective channels. The voice channel 702 will typically transfer relatively small voice protocol data units VPD1-VPDN at regular intervals, while the file channel 704 will transfer relatively large file protocol data units VPDU1-VPDU2 at sporadic intervals.

In Figure 7, the voice protocol data unit VPDU1 is transmitted over the ATM logical channel 700 immediately followed by the file protocol data unit FPDU1. As a result, the voice channel 702 experiences a delay time TVD from after the first voice protocol data unit VPDU1 is transferred until the second voice protocol data unit VPDU2 is transferred. The delay time TVD results from the file protocol data unit FPDU1 being transmitted over the logical channel 700 immediately after the first voice protocol data unit VPDU1. During the transfer of a large file over the file channel 704, many large file protocol data units will be interposed between successive voice protocol data units, resulting in an increase of the average delay time TAVG for the voice channel 702 that may adversely affect the QOS level of the voice channel. Such an increase in the average delay TAVG will be perceived by users of the voice channel 702 as some form of audio distortion, as previously mentioned.

Figure 7 illustrates that when multimedia data is transferred over a single logical ATM channel, the QOS levels of any voice channels being transmitted over the logical channel may be adversely affected. This is true because the conventional AAL5 layer protocol transmits an entire AAL5 PDU at a time over the logical ATM channel and does not account for any affect this may have on the QOS levels of voice channels being transmitted over the same logical channel. With the conventional AAL5 layer protocol, the only way to ensure that the QOS levels of the voice channels are not adversely affected by the transfer of video and file data is to transmit the voice channels over a separate logical ATM channel. The use of separate ATM logical channels, however, consumes additional bandwidth and may not always be an option. An alternative is to include information in the ATM header 202 that identifies to which AAL5 PDU a particular ATM cell belongs and then to transmit a number of AAL5 PDUs in parallel over the logical channel. Such an approach, however, reduces the efficiency of the ATM network by increasing the size of the header 202 relative to the payload 204, as will be appreciated by those skilled in the art. The AAL 3/4 standard utilizes this approach and has not gained wide acceptance, at least in part because of the reduced efficiency resulting from this approach.

There is a need for a method and system allowing a single logical ATM channel to be utilized to transfer multimedia data while also maintaining the desired QOS levels for each channel being transmitted over the single logical ATM channel.

A method and system provide multiple quality of service (QOS) levels over a single asynchronous transfer mode (ATM) virtual communications channel. According to one aspect of the present invention, a method assigns a priority level to each frame to be communicated over the ATM virtual communications channel. Each assigned priority level defines the QOS level of the corresponding frame. The priority levels of the frames to be communicated are monitored, and each frame is adapted into a corresponding sequence of ATM cells. The frames are adapted according to the assigned priority levels of the frames. The adaptation of particular frames is interrupted according to the monitored priority levels, and the adaptation of interrupted frames is resumed according to the monitored priority levels. An indication is provided of when the adaptation of any frame has been interrupted and resumed.

The ATM cells are communicated over the ATM virtual communications channel according to the order the cells are adapted. The communicated ATM cells are reassembled into the corresponding frames using the provided indications of when the adaptation of particular frames has been interrupted and resumed to thereby reassemble the frames according to the assigned priority levels of the frames and in this way achieve the desired QOS levels of the frames.

Figure 1 is a diagram illustrating conventional time-division multiplexing of data signals for a plurality of data channels.

Figure 2 is a diagram illustrating the format of a conventional Asynchronous Transfer Mode ("ATM") protocol data unit ("PDU") or cell.

Figure 3 is a diagram illustrating the variable time delays and corresponding Quality of Service ("QOS") levels experienced by respective data channels in a conventional ATM system.

Figure 4 is a graph illustrating the average delay time of ATM cells required to maintain a particular QOS level.

Figure 5 is a diagram illustrating the format of a conventional ATM Adaptation Layer Type 5 ("AAL5") frame or PDU.

Figure 6 is a diagram illustrating the process executed by the AAL5 protocol to detect the end of a first AAL5 PDU and the start of a second AAL5 PDU.

Figure 7 is a diagram illustrating the adverse effect on the QOS level of a voice channel when large file data is being transmitted over a file channel when the file and voice channels are being transmitted over the same ATM logical channel.

Figure 8 is a functional block diagram illustrating a communications system for maintaining multiple QOS levels over a single ATM logical channel according to one embodiment of the present invention.

Figure 9 is a diagram illustrating the operation of the communications system of Figure 8.

Figure 10 is a more detailed functional block diagram of the dynamic fragmentation layer module of Figure 8 according to one embodiment of the present invention.

Figure 11 is a flowchart illustrating the process executed by the dynamic fragmentation layer module of Figure 10.

Figure 12 is a diagram illustrating in more detail a priority level field or CPCS-UU field a trailer portion of a dynamic fragmentation unit ("DFU") PDU generated by the dynamic fragmentation layer module of Figure 10.

Figure 13 is a flowchart illustrating the process executed by the dynamic fragmentation layer module of Figure 10 in generating a full DFU PDU.

Figure 14 is a flowchart illustrating the process executed by the dynamic fragmentation layer module of Figure 10 in generating an interrupt DFU PDU.

Figure 15 is a flowchart illustrating the process executed by the dynamic fragmentation layer module of Figure 10 in generating a termination DFU PDU.

Figure 16 is a state diagram illustrating the process executed by the receiver of Figure 8 during operation of the communications system.

Figure 17 is a logical diagram illustrating an example of the overall operation of the communications system 800 of Figure 8.

Figure 18 is a table illustrating the operation of the receiver in the example of Figure 17 in receiving DFU PDUs having various priority levels and showing the dynamic nature of the priority levels of the received DFU PDUs.

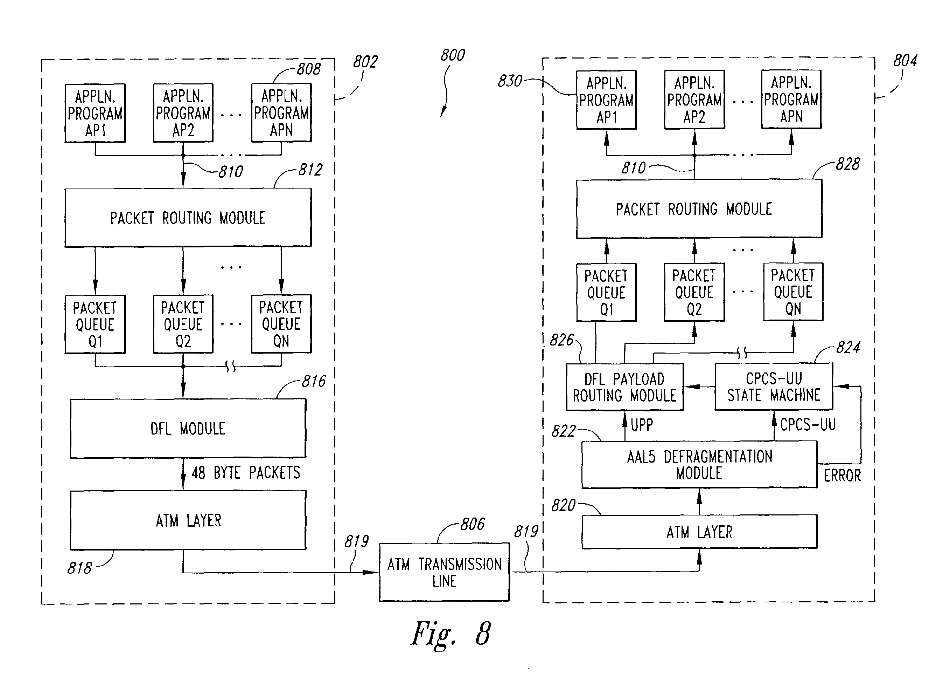

Figure 8 is a functional block diagram of an ATM communications system 800 including a transmitter 802 and receiver 804 that implement a multiple priority AAL5 protocol to communicate multiple QOS levels of data over a single ATM logical channel according to one embodiment of the present invention. The multiple priority AAL5 protocol assigns respective priority levels to various types of multimedia data being transmitted over the single ATM logical channel, and then utilizes the assigned priority levels to maintain desired QOS levels for the data being transmitted, as will be described in more detail below. The transmitter 802 and receiver 804 are connected through an ATM transmission line 806, which communicates conventional ATM cells from the transmitter to the receiver. The detailed operation and structure of the ATM transmission line 806, which corresponds to the physical layer of the system 800, is tangential to an understanding of the system and thus, for the sake of brevity, will not be described in more detail. One skilled in the art will understand that the ATM transmission line 806 may take a variety of different forms, such as fiber-optic cables when the system 800 is being implemented using the SONET standard. Furthermore, one skilled in the art will understand appropriate circuitry for forming the components described below, and will appreciate that many of the components may be implemented in hardware circuitry or in software. Certain details are set forth below to provide a sufficient understanding of the invention, but it will be clear to one skilled in the art that the invention may be practiced without these details. In some instances, well-known circuits, control signals, timing protocols, and software operations have not been shown in detail to avoid unnecessarily obscuring the invention.

The transmitter 802 includes a plurality of application programs AP1-APN, each application program executing to perform a desired function such as word processing, audio communications, videoconferencing, etc. Each program AP1-APN generates frames 810 that include data to be transferred to the receiver 804. The type of data contained in each frame 810 depends on the application program AP1-APN generating the frame. For example, a word processing program typically generates frames 810 containing text data while an audio communications program generates data packets containing digitized audio data. The structure of the frames 810 may correspond to any of a variety of different communications protocols, such as the TCP/IP protocol previously discussed in relation to the Internet. A packet routing module 812 routes the frames 810 from each application program AP1-APN a corresponding packet queue Q1-QN. Each packet queue Q1-QN is assigned an associated priority level which determines the order in which the frames placed in that queue are eventually transferred to the receiver 804, as will be discussed in more detail below. In the example of Figure 8, Q1 is assigned the highest priority level and QN the lowest priority level. It should be noted that the packet routing module 812 may operate in a variety of different ways in routing frames to the packet queues Q1-QN, as will be appreciated by those skilled in the art. For example, the packet routing module 812 may dynamically adjust the priority level of each packet queue Q1-QN depending on the number and type of application programs 808 and may route frames to a plurality of packet queues where a particular application program AP1-APN generates frames containing different types of data, such as in a multimedia application program. Alternatively, the packet routing module 812 may be eliminated and each application program AP1-APN coupled permanently to a selected one or ones of the packet queues Q1-QN, with each packet queue being assigned a corresponding fixed priority level.

A dynamic fragmentation layer ("DFL") module 816 monitors the contents of the packet queues Q1-QN, selects frames from the packet queues according to the associated priority levels, and converts or adapts the selected frames into dynamic fragment unit ("DFU") PDUs having a structure similar to and compatible with conventional AAL5 PDUs. Unlike the conventional AAL5 PDU, however, each DFU PDU includes a priority level or CPCS-UU field in the trailer containing specific protocol information that allows the DFL module 816 to segment a conventional AAL5-PDU into several fragments or segments for transmission to the receiver 804, as will be described in more detail below. In other words, the DFL module 816 fragments original frames stored in the packet queues Q1-QN into several smaller AAL5 PDUs defined as DFU PDUs, each DFU PDU having a format identical to a conventional AAL5 PDU (except for the CPCS-UU field) and containing only a portion of the original frame being transmitted. Recall, the conventional AAL5 layer protocol adapts an entire frame into a corresponding AAL5 PDU and transmits the AAL5 PDU in its entirety as a sequence of ATM cells. Thus, the conventional AAL5 their protocol does not allow for the transmission of a portion of an original frame.

The DFL module 816 segments the conventional AAL5PDU when it determines a frame having a higher priority level than the frame currently being transmitted has been placed in the corresponding packet queue Q1-QN. In this way, the DFL module 816 interrupts the transmission of a frame stored in a lower priority level packet queue Q1-QN when it detects a frame has been placed in a higher priority level packet queue. After the frame having the higher priority level has been transmitted, the DFL module 816 resumes the transmission of the frames having lower priority levels. The DFL module 816 outputs each DFU PDU as a sequence of 48 byte packets that are applied to a conventional ATM layer 818 which, in turn, places each 48 byte packet into the payload of a corresponding ATM cell 819 that is then transmitted over the ATM transmission line 806.

The receiver 804 includes a conventional ATM layer 820 for processing the ATM cells 819 transferred over the transmission line 806. A defragmentation module 822 receives the 48 bytes packets corresponding to the payloads of the received ATM cells from the ATM layer 820, reconstructs the original DFU PDU, and verifies that no DFU PDUs were lost in transmission from the transmitter 802, as will be described in more detail below. A dynamic fragmentation layer ("DFL") routing module 826 receives the user payload packet UPP (see Figure 5) portion of the reconstructed DFU PDU and routes the payload packet to a corresponding packet queue Q1-QN responsive to controls signals from a CPCS-UU state machine circuit 824. The state machine circuit 824 examines the CPCS-UU field in the reconstructed DFU PDU and utilizes the information contained in the CPCS-UU to apply control signals to the routing module 826 which, in turn, routes the user payload packet UPP to the appropriate queue Q1-QN. Recall, the CPCS-UU contains information about the relative priority level PL of the corresponding DFU PDU. Each of the packet queues Q1-QN has an assigned priority level PL as previously described for the packet queues Q1-QN contained in the transmitter 802. It should be noted that although the transmitter 802 and receiver 804 contain the same number of packet queues Q1-QN in the example of Figure 8, the number of queues in each may differ. A packet routing module 828 receives the contents of the packet queues Q1-QN and routes the frames 810 contained in each packet queue to a corresponding application program AP1-APN. Although the receiver 804 includes the packet routing module 828, in some applications the packet routing module may be omitted, with each packet queue Q1-QN being permanently associated with a corresponding application program AP1-APN.

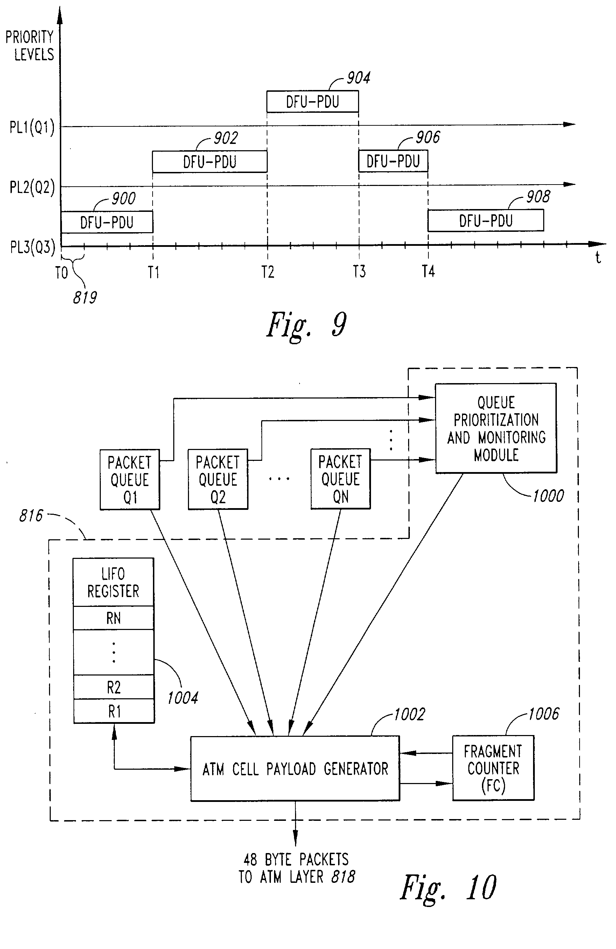

Figure 9 is a diagram illustrating the overall operation of the communications system 800 in transferring PDUs from the transmitter 802 to the receiver 804 using the multiple priority AAL5 protocol. In Figure 9, the vertical axis represents the priority levels of data being sent from the transmitter 802 to the receiver 804 and the horizontal axis represents time. The example of Figure 9 illustrates three priority levels PL1-PL3 assigned to the packet queues Q1-Q3 as indicated in parentheses. The priority level PL1 is the highest assigned priority level and priority level PL3 the lowest assigned level, meaning that data assigned to the priority level PL1 and stored in the packet queue Q1 should be given priority over data assigned priority level PL3 and stored in the packet queue Q3. At some time prior to a time T0, one of the application programs AP1-APN supplies a frame 810 to the packet routing module 812 which, in turn, stores the frame in the packet queue Q3. The DFL module 816 thereafter places the frame 810 contained in the packet queue Q3 into a DFU PDU 900, and the ATM layer 818 constructs conventional ATM cells 819 from the DFU PDU 900 as previously described. At the time T0, the ATM layer 818 begins transmitting the ATM cells 819 corresponding to the DFU PDU 900.

At some time prior to a time T1, the DFL module 816 detects that the packet routing module 812 has routed a frame 810 from a corresponding application program AP1-APN into the packet queue Q2. Because the priority level PL2 is greater than the priority level PL3, the frame stored in the packet queue Q2 takes precedence over the frame stored in the packet queue Q3. The DFL module 816 generates a DFU PDU 902 corresponding to the data stored in the packet queue Q2, and the ATM layer 818 places the DFU PDU 902 into ATM cells 819, as previously discussed. At the time T1, the transmission of the ATM cells 819 corresponding to the DFU PDU 900 is terminated, and transmission of the ATM cells corresponding to the DFU PDU 902 is initiated. At some time prior to a time T2, the DFL module 816 detects that the packet routing module 812 has routed a frame 810 into the packet queue Q1. The priority level PL1 is greater than the priority level PL2 of the DFU PDU 902 currently being transmitted, and thus the data in the packet queue Q1 takes precedence over the data currently being transmitted. At this point, the DFL module 816 generates a DFU PDU 904 corresponding to the data stored in the packet queue Q1, and ATM layer 818 places the DFU PDU 1 into corresponding ATM cells 819. At the time T2, the transmission of the ATM cells 819 corresponding to the DFU PDU 902 is terminated, and transmission of the DFU PDU 904 commences.

In the example of Figure 9, the priority level PL1 associated with the DFU PDU 904 is higher than the priority level associated with any other data being transmitted. Accordingly, the DFU PDU 904 is transmitted in its entirety since it has the highest priority level PL1. At a time T3, transmission of the DFU PDU 904 is complete and the entire DFU PDU has been transmitted to the receiver 804. During the transmission of the DFU PDU 904, the DFL module 816 determines which of the packet queues Q1-QN contains a frame 810 having the next highest priority level to the priority level PL1. In the example of Figure 9, the priority level PL2 is next highest to the priority level PL1. The DFL module 816 constructs a DFU PDU 906 containing the remaining portion of the frame in the packet queue Q2, and at the time T3 transmission of the ATM cells 819 corresponding to the DFU PDU 906 commences. While the DFU PDU 906 is being transmitted, the DFL module 816 once again determines which of the packet queues Q1-QN contains a frame 810 having the next highest priority level to the priority level PL2. The priority level PL3 is the next highest priority to the priority level PL2, and the corresponding packet queue Q3 contains additional data packets comprising the frame since transmission of this frame was terminated at the time T1. Thus, the DFL module 816 constructs a DFU PDU 908 containing the remaining portion of the frame in the packet queue Q3, and at the time T4 transmission of the ATM cells 819 corresponding to the DFU PDU 908 starts and the PDU is transmitted in its entirety.

The example of Figure 9 demonstrates that the multiple priority AAL5 protocol prioritizes the transmission of various types of data and thereby allows the communications system 800 to maintain respective QOS levels for the types of data being transmitted over the single virtual ATM channel being carried on the transmission line 806. This is done in the transmitter 802 by the DFL module 816 which monitors the contents of the packet queues Q1-QN and ensures that the data contained in the packet queue having the highest priority level is transmitted first to the receiver 804. Similarly, in the receiver 804 the DFL payload routing module 826 and state machine circuit 824 operate in combination to route the data having the highest priority level to the appropriate packet queue Q1-QN so that this data is available to the corresponding application program AP1-APN in advance of lower priority frames being routed to lower priority packet queues, as will be described in more detail below. By transmitting higher priority data in advance of lower priority data, the QOS level for each type of data is maintained by ensuring that the average delay time between successive data packets is less than a desired maximum.

The overall operation of the transmitter 802 and receiver 804 in communicating data using the multiple priority AAL5 protocol has now been described with reference to Figures 8 and 9. The operation of various components in the transmitter 802 and receiver 804 will now be described in more detail. Figure 10 is a more detailed functional block diagram of the DFL module 816 contained in the transmitter 802 of Figure 8 according to one embodiment of the present invention.

The packet queues Q1-QN are also illustrated in Figure 10 to facilitate the description of the DFL module 816. The DFL module 816 includes a queue prioritization and monitoring ("QPM") module 1000 that monitors the contents of the packet queues Q1-QN and makes two determinations responsive to the contents of the packet queues. First, the QPM module 1000 determines a highest queue priority number QH corresponding to the "active" queue Q1-QN having the highest priority level PL. An active queue is a queue Q1-QN that contains frames waiting to be transmitted. For example, if the packet queues Q1 and Q2 are the active queues, the QPM module 1000 sets the highest priority number QH equal to 2 because the packet queue Q2 is the active queue having the highest priority. The QPM module 1000 also determines whether there is at least one packet queue Q1-QN containing a "new" frame. In the following description, the term new frame is used to define a frame for which none of the frame has yet been transmitted (*i.e.*, the entire frame remains in the corresponding queue) and the term "current frame" defines a frame that has been partially transmitted (*i.e.*, a portion of the new frame originally placed in the queue has already been transmitted). The QPM module 1000 generates a not all empty bit NAE having a binary value that is determined by whether any queue Q1-QN contains a new frame. When the QPM module 1000 determines at least one of the packet queues Q1-QN contains a new frame, the module sets the NAE bit and otherwise resets the NAE bit. An ATM cell payload generator 1002 uses the NAE bit in controlling operation of the DFL module 816, as will be described more detail below.

The DFL module 816 further includes a last in first out ("LIFO") register 1004 having a plurality of storage locations R1-RN, each storage location storing the queue number for one of the active packet queues Q1-QN. The number of storage locations R1-RN in the LIFO register 1004 corresponds to the number of packet queues Q1-QN so that in the situation where all queues contain frames, each queue number may be stored in a corresponding location R1-RN. The width of each storage location R1-RN is a function of the number of packet queues Q1-QN. For example, in one embodiment the transmitter 802 includes eight packet queues Q1-Q8. In this embodiment, the LIFO register 1004 includes eight storage locations R1-R8, each storage location being three bits wide. The payload generator 1002 pushes queue numbers onto and pulls queue numbers from the LIFO register 1004 responsive to which ones of the packet queues Q1-QN are active, as will be described in more detail below.

A fragment counter 1006 generates a fragment count FC that is incremented responsive to a signal applied by the payload generator 1002. The payload generator 1002 increments the FC count each time an independent DFU PDU has been generated and sent to the ATM layer 818 for transmission and also sets an SC segment of the CPCS-UU field to the current value of the FC count when a new SC value is required, as will be described in more detail below. The width of the FC count may be any number of bits, but only the four least significant bits are utilized in setting the value of the SC segment. This is true because in the current AAL5 protocol standard the CPCS-UU field is 8 bytes wide and of this 8 bytes only 4 bits are available for the SC segment due to the other fields being defined in the CPCS-UU field to implement the multiple priority AAL5 protocol, as will be discussed in more detail below. It should be noted that the width of SC segment is limited to 4 bits to maintain compatibility between the multiple priority AAL5 protocol and the current AAL5 standard which, as previously mentioned, is desirable although not required.

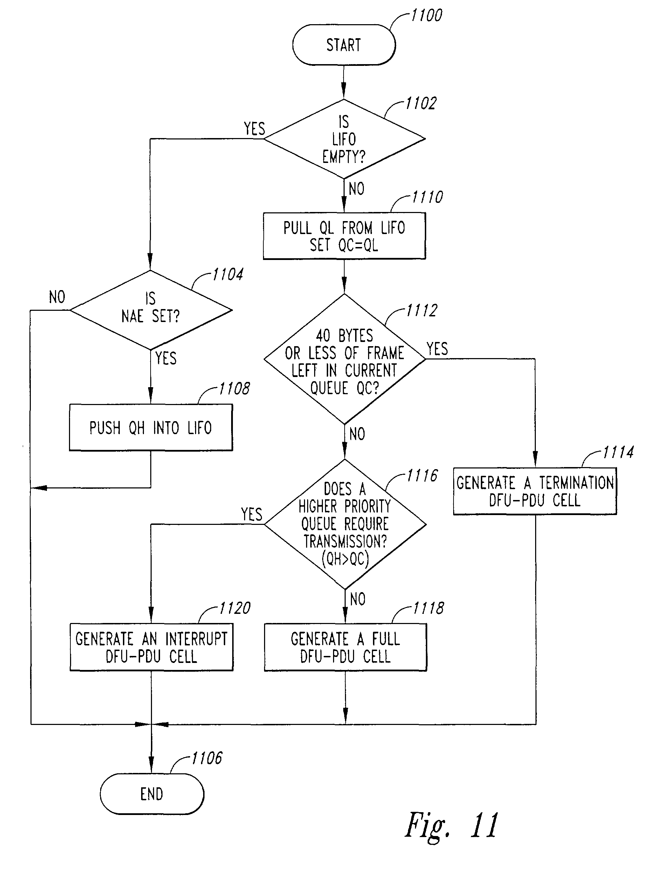

The process executed by the ATM cell payload generator 1002 will now be described in more detail with reference to the flow chart of Figure 11. The process begins in step 1100 and proceeds immediately to step 1102. In step 1102, the payload generator 1002 determines whether the LIFO register 1004 is empty. The LIFO register 1004 is empty when no queue numbers are stored in any of the storage locations R1-RN, which occurs when no current frames are contained in any of the packet queues Q1-QN. When the LIFO register 1004 is empty, the process goes to step 1104 and the payload generator 1002 determines whether the NAE bit is set. If the NAE bit is reset (*i.e.*, not set), none of the packet queues Q1-QN contain new frames and the process proceeds to step 1106 and terminates because there are no current or new frames awaiting transmission in any of the packet queues. If the NAE bit is set, at least one of the packet queues Q1 -QN contains new frames and the process proceeds to step 1108. In step 1108, the payload generator 1002 pushes the queue number QH into the LIFO register 1004 in preparation for the next execution cycle of the process. From step 1108, the process goes to step 1106 and terminates.

Returning to step 1102, if the LIFO register 1004 is not empty, the process proceeds to step 1110 and the payload generator 1002 pulls the last queue number QL pushed into the LIFO register, and sets a current queue number QC equal to QL. From step 1110, the process proceeds to step 1112 and the payload generator 1002 determines whether there are less than 40 bytes contained in the current queue QC. When the determination in step 1112 is positive, the process goes to step 1114 and generates a termination DFU PDU which is a 48 byte packet including the 8 byte trailer of the DFU PDU. Recall, as previously discussed with reference to Figure 5, each AAL5 PDU and thus each DFU PDU includes an eight byte trailer that is contained in the payload portion of the last ATM cell sent to complete transmission of the DFU PDU. Thus, in step 1114 the payload generator 1002 adds any required padding bytes to the remaining bytes in the current queue QC so that the remaining bytes plus the padding bytes equal 40 bytes. The payload generator 1002 then adds the 8 byte trailer to these 40 bytes, provides this 48 byte packet to the ATM layer 818, and proceeds to step 1106 to terminate the current execution cycle of the payload generator 1002. The operation of the payload generator 1002 and generating a termination DFU PDU will be described in more detail below.

When the determination in step 1112 is negative, indicating the current packet queue QC contains more than 40 bytes, the process proceeds to step 1116 and determines whether a packet queue Q1-QN having a higher priority than the current packet queue QC contains frames requiring transmission. In other words, step 1116 determines whether frames having a higher priority than those currently being transmitted are awaiting transmission in the corresponding higher priority packet queue Q1-QN (*i.e.*, whether QH <QC). When the determination in step 1116 is negative, the process proceeds to step 1118 and the payload generator 1002 generates a full DFU PDU cell containing 48 bytes retrieved from the current packet queue QC. The payload generator 1002 provides this 48 byte full DFU PDU cell to the ATM layer 818 and thereafter proceeds to step 1106 to terminate the current execution cycle. The operation of the payload generator 1002 in generating a full DFU PDU cell will be described in more detail below.

When the determination in step 1116 is positive, one of the packet queues Q1-QN having a higher priority than the current packet queue (*i.e.* QH> QC) now contains frames awaiting transmission and the process proceeds to step 1120. In step 1120 the payload generator 1002 generates an interrupt DFU PDU cell including the eight byte trailer that contains information allowing the receiver 804 to detect that the received cell is not the last ATM cell sent to complete transmission of an AAL5 PDU, as will be describe in more detail below. The interrupt DFU PDU cell indicates more cells will be transmitted to complete the transmission of the AAL5 PDU. The generation of the interrupt DFU PDU cell terminates transmission of the corresponding DFU PDU, which, as previously described, has the same form as a conventional AAL5 PDU except for the information contained in the CPCS-UU field contained in the eight byte trailer. Once the payload generator 1002 generates the interrupt DFU PDU cell, the payload generator pushes the queue number QC onto the LIFO register 1004 and then pushes the queue number QH onto the LIFO register. Finally, in step 1120 the payload generator 1002 provides the 48 byte packet corresponding to the interrupt DFU PDU cell to the ATM layer 818, and the process thereafter proceeds to step 1106 and the current cycle terminates. The operation of the payload generator 1002 in generating the interrupt DFU PDU cell will be described in more detail below.

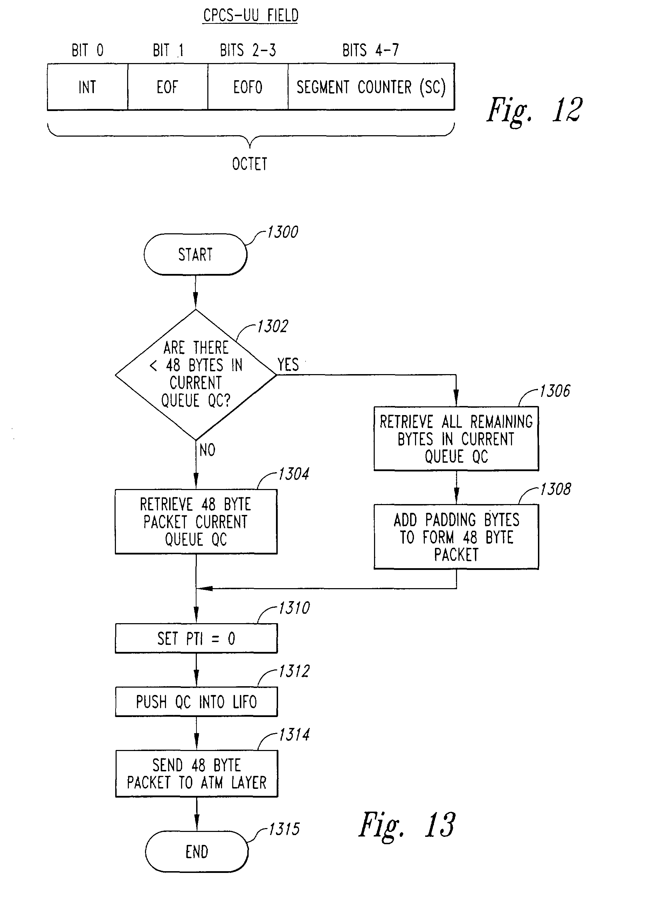

Before discussing the operation of the payload generator 1002 in generating the termination, full, and interrupt DFU PDU cells in more detail, the CPCS-UU field will first be discussed with reference to Figure 12 because the generation of the these cells includes setting particular bits contained in the CPCS-UU field and a more detailed description of the CPCS-UU field will therefore be helpful. Figure 12 illustrates the four segments contained in the CPCS-UU field according to one embodiment of the present invention. The CPCS-UU field is one octet wide and includes an interrupt bit INT that indicates the transmission of a current frame has been interrupted in order to begin transmission of a higher priority frame. More specifically, when the INT bit is set equal to 1 the ATM cell terminates the current DFU PDU being transmitted and indicates the next ATM cell will contain the beginning of a new DFU PDU. The second segment of the CPCS-UU field is an end of frame bit EOF that indicates the current ATM cell terminates transmission of the corresponding AAL5 PDU. When the EOF bit is set equal to 1, this indicates all DFU PDUs making up a particular AAL5 PDU have been transmitted. The third segment is an end of frame basic layer bit EOF0 that is set equal to 1 to periodically synchronize the receiver 804 and transmitter 802 so that if an ATM cell is lost the receiver may quickly recover and resume proper reception of transmitted ATM cells, as will be described more detail below.

The final segment of the CPCS-UU field is a 4-bit segment count SC contained in bits 4-7, as was previously mentioned with reference to Figure 10. The SC count is initially set equal to 0 and incremented each time a new DFU PDU is transmitted to thereby count modulo 16 the number of DFU PDUs transmitted. The SC count is utilized by the receiver 804 to ensure that every DFU PDU comprising an AAL5 PDU is received, as will be described in more detail below. Briefly, the receiver 804 maintains a corresponding next segment count NS, which it increments each time a DFU PDU is received. In this way, the receiver 804 determines whether the current DFU PDU just received is the DFU PDU the receiver expects to receive next by comparing the NS count maintained by the receiver to the SC count contained in the current DFU PDU. When the two counts match, the receiver 804 determines the current DFU PDU was properly received and that no intervening DFU PDUs sent between the current DFU PDU and the prior DFU PDU were lost during transmission. The SC count is necessary because the CRC segment in each DFU PDU trailer provides error detection only for that DFU PDU, and there is no CRC or other equivalent error detection at the frame level. Thus, if an entire DFU PDU was to be lost during transmission, the receiver 804 would have no way of detecting such a lost DFU PDU without the SC count. It should be noted that the SC count does not allow the receiver 804 to determine to which frame a lost DFU PDU belongs.

The operation of the payload generator 1002 in generating the termination, full, and interrupt DFU PDU cells will now be discussed in more detail with reference to Figures 13-15. Figure 13 is a flowchart illustrating the process executed by the payload generator 1002 in generating a full DFU PDU cell. The process begins in step 1300 the proceeds immediately step 1302 which determines whether the current queue QC contains less than 48 bytes of the frame being transmitted. When the determination in step 1302 is negative, the process proceeds to step 1304 and retrieves a 48 byte packet from the current queue QC. When the determination in step 1302 is positive, the process proceeds to step 1306 and retrieves all remaining bytes in the current queue QC. It should be noted that when the determination in step 1302 is positive, this indicates the current queue QC contains between 41 and 47 bytes (see step 1112 in Figure 11). Once the process retrieves all remaining bytes contained in the current queue QC in step 1306, the process proceeds to step 1308 and adds the required number of padding bytes to form a 48 byte packet. This 48 byte packet forms the payload portion of a full ATM cell. From either step 1304 or step 1308, the process proceeds to step 1310 and sets the PTI bit equal to 0 indicating the ATM cell containing the 48 byte packet from either step 1304 or 1308 is not the last ATM cell for the corresponding DFU PDU. The process proceeds from step 1310 to step 1312 and pushes the current queue number QC onto the LIFO register 1004. From step 1312, the process proceeds to step 1314 and applies the 48 byte packet along with the PTI bit to the ATM layer 818 and thereafter proceeds to step 1315 and terminates.

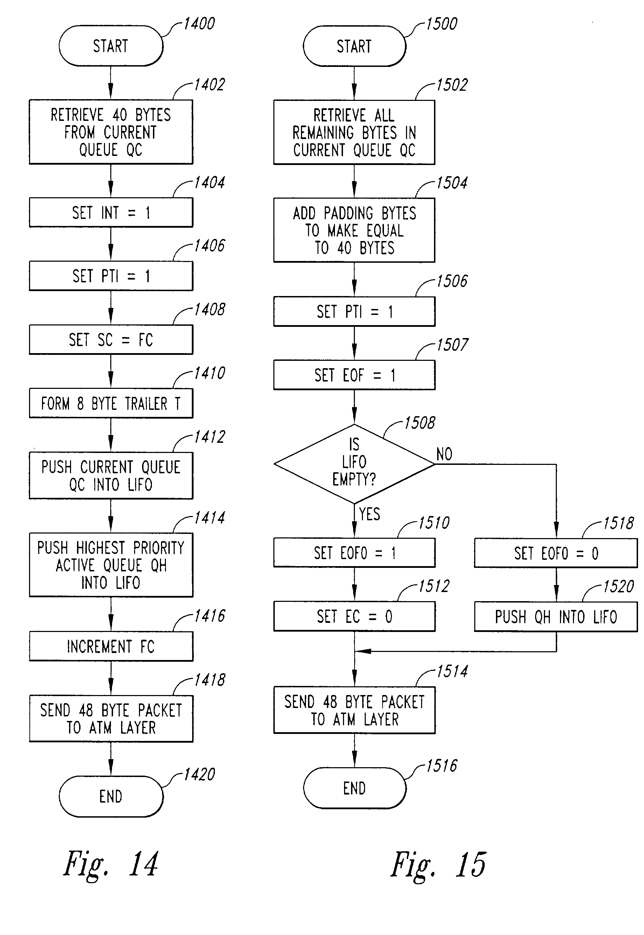

Figure 14 is a flowchart illustrating the process executed by the payload generator 1002 in generating an interrupt DFU PDU cell. The process begins in step 1400 and proceeds immediately step 1402 and retrieves 40 bytes from the current queue QC. Recall, the payload generator 1002 generates an interrupt DFU PDU cell when step 1116 (Figure 11) determines a queue QH having a higher priority than the current queue QC contains a frame requiring transmission. Once step 1402 retrieves 40 bytes from the current queue QC, the process proceeds to step 1404 and sets the INT bit equal to 1. The INT bit equal to 1 indicates the transmission of a current frame has been interrupted in order to begin transmission of a higher priority frame (*i.e*., when the INT bit is set equal to 1 the ATM cell terminates the current DFU PDU being transmitted). From step 1404, the process proceeds to step 1406 and sets the PTI bit equal to one, indicating the ATM cell is the last cell of the DFU PDU currently being transmitted. The process then goes to step 1408 and sets the SC count field equal to the FC count generated by the fragment counter 1006 which, as previously described, is incremented each time a new DFU PDU is transmitted to thereby count modulo 16 the number of DFU PDUs transmitted. After step 1408, the process proceeds to step 1410 and forms the 8 byte trailer that includes the CPCS-UU field which, in turn, includes the INT and PTI bits set equal to 1 and the SC count set equal to the FC count. From step 1410, the process goes to step 1412 and pushes the current queue number QC onto the LIFO register 1004. The process thereafter goes to step 1414 and pushes the highest priority active queue number QH onto the LIFO register 1004. From step 1414, the process goes to step 1416 and increments the FC count, and thereafter goes to step 1418 and applies the 48 byte packet to the ATM layer 818. As previously discussed, the 48 byte packet includes the 40 bytes pulled from the current queue QC along with the eight byte trailer T containing the CPCS-UU field.

Figure 15 is a flowchart illustrating the process executed by the payload generator 1002 in generating a termination DFU PDU cell. Recall, a termination DFU PDU cell is generated when the current queue QC contains 40 bytes or less (see step 1112 in Figure 11). The process begins in step 1500 and proceeds immediately to step 1502 which retrieves all remaining bytes in the current queue QC. From step 1502, the process proceeds to step 1504 and adds any padding bytes required to round the bytes retrieves from the queue QC to 40 bytes. For example, if the current queue QC contains 32 bytes, step 1504 will add 8 bytes to these 32 bytes so that the sum equals 40 bytes. The process then goes to step 1506 and sets the PTI bit equal to 1, indicating the ATM cell is the last cell of a corresponding DFU PDU. From step 1506, the process proceeds to step 1507 and sets the EOF bit to 1, which instructs the receiver 804 that the corresponding DFU PDU cell terminates the DFU PDU currently being transmitted.

The process then goes to step 1508 and determines whether the LIFO register 1004 is empty, which occurs when no packet queues Q1-QN contains a frame or portion of a frame awaiting transmission. When the determination in step 1508 is positive, the process goes to step 1510 and sets the EOF0 bit to 1 so that the transmitter 802 and receiver 804 are synchronized upon receipt of the corresponding termination DFU PDU cell, as will be described more detail below. The process synchronizes the transmitter 802 and receiver 804 at this point since the LIFO register 1004 is empty, indicating no frames are awaiting transmission. The process then proceeds to step 1512 and resets the FC count to 0. From step 1512, the process goes to step 1514 and forms the 48 byte packet including the CPCS-UU field having its bits set according to the previous steps. The process sends the 48 byte packet to the ATM layer 818 and then goes to step 1516 and terminates. When the determination in step 1508 is negative, the process proceeds to step 1518 and sets the EOF0 bit to 0 since the LIFO register 1004 is not empty. From step 1518, the process goes to step 1520 and pushes the queue number QH into the LIFO register 1004. The process goes from step 1520 to step 1514 and sends the corresponding 48 byte packet to the ATM layer 818, and thereafter goes to step 1516 and ends.

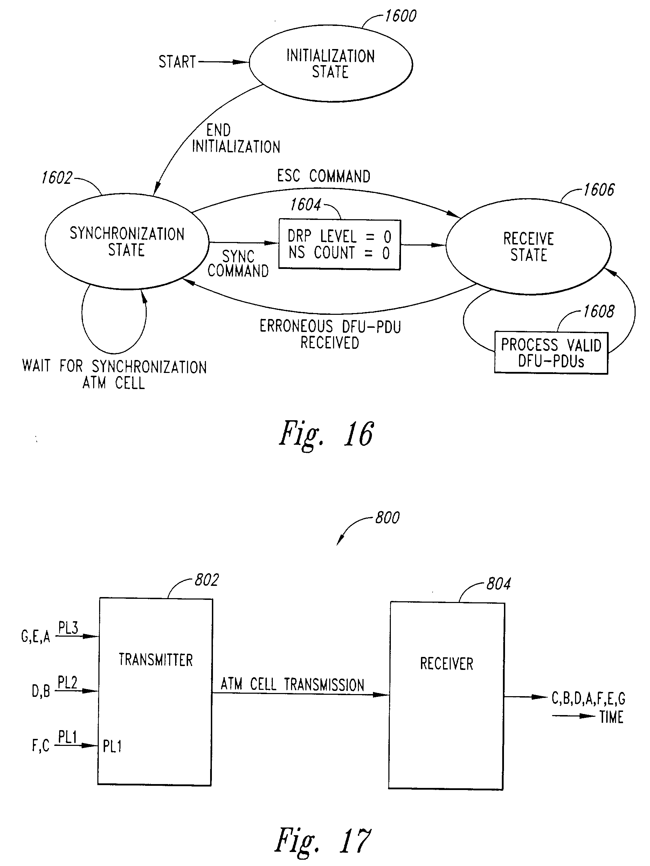

Figure 16 is a state diagram illustrating the process executed by the state machine 824 of Figure 8 during operation of the receiver 804. The process starts and immediately enters an initialization state 1600 during which the state machine 824 initializes a number of parameters. For example, during the initialization state 1600 the DRP level and NS count are set to 0. Once the state machine 824 has initialized all required components in the receiver 804, the initialization state 1600 terminates in the state machine 824 begins operation in a synchronization state 1602. In the synchronization state 1602, the state machine 824 waits for receipt of a synchronization ATM cell, which is defined as an ATM cell containing the trailer of a corresponding DFU PDU where the EOF, EOF 0, and INT bits contained in the CPCS-UU field of the trailer along with the PTI bit contained in the header H of ATM cell have a predetermined values to define either an escape command ESC or a synchronization command SYNC, as set forth below in Table 1.

**TABLE 1**

| Command | INT | EOF | EOF0 | PTI |
|---|---|---|---|---|
| SYNC | 0 | 1 | 1 | 1 |
| ESC | 1 | 1 | 1 | 1 |

The SYNC and ESC commands allow the transmitter 802 and receiver 804 to be synchronized. It should be noted that only the SYNC command is required when the receiver 804 is communicating with a transmitter such as the transmitter 802 that communicates using the multiple priority AAL5 protocol. The ESC command allows the receiver 804 to communicate with a transmitter that communicates using the conventional AAL5 protocol. In the conventional AAL5 protocol, the CPCS-UU field is reserved and all of the bits in the CPCS-UU field are set to 1 whenever a trailer is transmitted. Thus, an ESC command is received by the receiver 804 whenever the trailer of a conventional AAL5 PDU is transmitted using the conventional AAL5 protocol.

The process operates in the synchronization state 1602 until a synchronization ATM cell is received. When the synchronization ATM cell contains the SYNC command, the process exits the synchronization state 1602 and goes to a step 1604 in which a dynamic reception priority level DRP and the NS count are reset to 0 to thereby synchronize the receiver 804 and transmitter 802, as previously mentioned with reference to Figure 8. Thus, the next received DFU PDU is assigned DRP level 0 and must contain an SC count set equal to 0. Once step 1604 has reset the DRP level and NS count, the process commences operation in a receive state 1606. The receive state 1606 contains two sub modes of operation, a multiple priority sub mode and conventional sub mode. When the receive state 1606 is entered from step 1604, the process executes in the receive state in the multiple priority sub mode. In the multiple priority sub mode, the state machine 824 determines whether each received DFU PDU is valid. As previously discussed, the state machine 824 determines whether a received DFU PDU is valid by comparing the SC count contained in the corresponding CPCS-UU field to the NS count generated by the state machine 824 (Figure 8). When the two counts are equal, the received DFU PDU is valid, and is otherwise invalid. In addition, the AAL5 defragmentation module 822 (Figure 8) also performs error detection on the received DFU PDU, such as through the CRC field of the DFU PDU, and flags the state machine 824 when an error is detected. Thus, during operation in the receive state 1606 a received DFU PDU is valid unless the SC count does not equal the NS count or the module 822 detects an error in the received DFU PDU. When the received DFU PDU is valid, the DFU PDU is processed in step 1608 as previously described with reference to Figure 8. When an invalid DFU PDU is detected, the state machine 824 terminates operation in the receive state 1606 and returns to the synchronization state 1602 and awaits receipt of either an ESC or SYNC command.

When the synchronization ATM cell contains the ESC command, the process exits the synchronization state 1602 and goes directly to the receive state 1606. When the receive state 1606 is entered in this way, the state machine 824 operates in the conventional sub mode. In the conventional sub mode, the state machine 824 ignores the CPCS-UU field and operates in combination with the payload routing module 826 to route the payloads of conventional AAL5 PDUs to the desired packet queue Q1-QN in a predetermined manner.

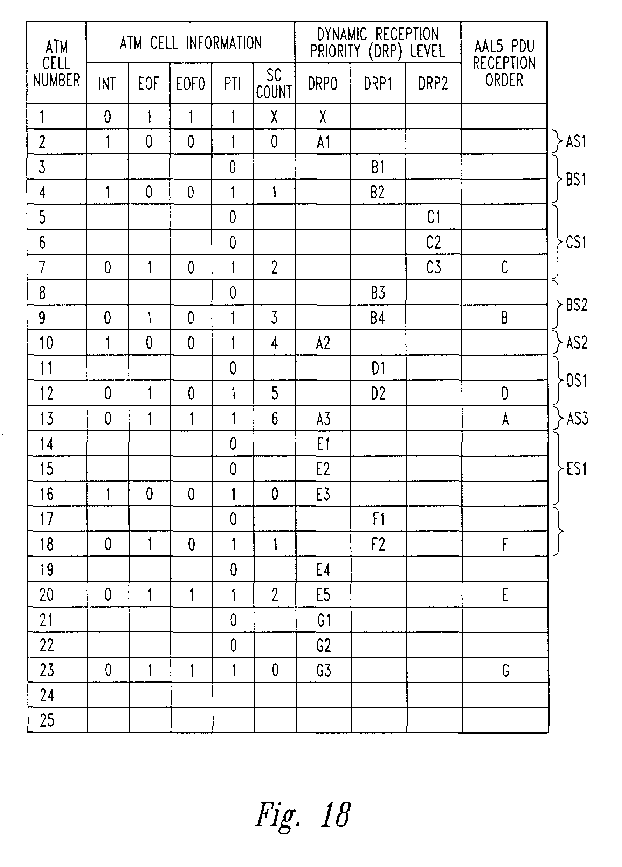

The overall operation of the communications system 800 of Figure 8 will now be described in more detail with reference to Figures 17 and 18. Figure 17 is a logical representation of the communications system 800 of Figure 8 showing a plurality of AAL5 PDUs or frames A-G having the associated priority levels PL1-PL3 as indicated, where the priority level PL1 is the highest priority level, followed by level PL2, and then level PL3. In this example, the transmission of the frame A begins, and frame B arrives for transmission before the transmission of frame A is complete. The frame C arrives for transmission before the transmission of the frame B is complete. The frame D arrives for transmission after the transmission of frames B and C has been completed, but before the transmission of frame A is complete. The frame E also arrives before the transmission of frame A is complete, and the frame F arrives for transmission during the transmission of frame E. The frame G arrives for transmission after the frame F but during the transmission of frame E. In this example, the receiver 804 receives the complete frame C first, followed by the frames B, D, A, F, E, and G in that order as indicated in Figure 17 and as will now be described in more detail below.

Figure 18 is a table illustrating the operation of the receiver 804 in receiving the frames A-G having the priority levels and being applied to the transmitter 802 as just described with reference to Figure 17. The table shows the status of the various bits in the CPCS-UU field of transmitted DFU PDUs and the corresponding DRP level of each received DFU PDU. The left column represents ATM cells, each cell being assigned a corresponding number from 1-25. The next five columns to the right illustrate information contained in each of the ATM cells 1-25. More specifically, these columns illustrate the status of the bits INT, EOF, EOF0, PTI, and SC. The next three columns to the right illustrate the DRP level of each DFU PDU being received, with the three levels DRP0-DRP2 being illustrated in the example of Figure 18. In the three priority level columns DRP0-DRP2, an alphanumeric designation is given to the portion or fragment of a DFU PDU contained in the corresponding ATM cell. For example, the ATM cell numbers 3 and 4 carry the fragments B1 and B2 of a corresponding DFU PDU formed by the two fragments. One or more fragments make up a DFU PDU and one or more DFU PDUs, in turn, make up a frame, as previously described. The far-right column illustrates the reception order of each frame being transmitted using the multiple priority AAL5 protocol. The X's in the table indicate a "don't care" condition for the corresponding bit or field.

In the example of Figure 17, the ATM cell number 1 contains the SYNC command which, as previously described, causes the receiver 804 to reset the NS count and dynamic reception priority level to DRP0. The next ATM cell number 2 begins the transmission of frame A. In the ATM cell number 2, the INT and PTI bits are set. The set PTI bit indicates the ATM cell number 2 is the last cell of the DFU PDU currently being processed, and the set INT bit indicates the transmission of the frame A is being interrupted. In response to the set INT bit, the receiver 804 increments the DRP level so that the next DFU PDU being processed has the dynamic reception priority level DRP1. In this example, the A1 fragment defines the first DFU PDU that is processed for the frame A. The ATM cell numbers 3 and 4 are thereafter processed and contain respective fragments B1 and B2 of the next DFU PDU being processed. Note that the ATM cell number 3 does not contain a trailer and thus contains no values for the INT, EOF, and EOF0 bits. Also, in ATM cell number 3 the PTI bit is 0 indicating the ATM cell is not the last cell in the current DFU PDU.

In the ATM cell number 4 the INT bit is set, indicating the transmission of the current DFU PDU is being interrupted and causing the receiver 804 to increment the DRP level to DRP2. The set PTI bit in ATM cell number 4 indicates the cell is the last cell of DFU PDU currently being processed. The ATM cell numbers 5-7 contain respective fragments C1-C3 that collectively form a DFU PDU corresponding to the frame C. Recall, the frame C has the highest priority level PL1 in the transmitter 802. In the current example, no other frames have higher priority levels than frame C and thus no other frames can interrupt the transmission of frame C. As a result, frame C is received in its entirety by the receiver 804 upon successive reception of the ATM cell numbers 5-7. In the ATM cell number 7, the PTI bit is set indicating this ATM cell is the last cell in the current DFU PDU. In addition, in the ATM cell number 7 the EOF bit is set indicating the cell contains the end of the current DFU PDU. In response to the set EOF bit, the receiver 804 decrements the dynamic reception priority level so that the subsequent DFU PDU has the dynamic reception priority level DRP1. In receiving the remaining frames, the receiver 804 operates in a manner analogous to that just described for the frames C and B, and thus, for the sake of brevity, this operation will not be described in further detail.

The example illustrated in Figures 17 and 18 illustrates the dynamic nature of the dynamic reception priority levels associated with the frames A-G being communicated by the communications system 800. For example, note that both frames C and F are assigned the highest priority level PL1 in the transmitter 802. In the receiver 804, however, these frames are assigned different dynamic reception priority levels, with the frame C being assigned priority level DRP2 and the frame F being assigned the priority level DRP1. The dynamic reception priority level assigned to a particular frame depends on the priority levels of other frames being received in the receiver 804 when this particular frame is transmitted to the receiver. When the receiver 804 starts receiving the frame C, the frame B having dynamic reception priority level DRP1 was being received just prior. As a result, the receiver 804 assigns the frame C the next highest dynamic reception priority level DRP2. In contrast, when the receiver 804 starts receiving the frame F, the frame E having the priority level DRP0 was being received just prior. As a result, the frame F is assigned the next highest dynamic reception priority level DRP1 in the receiver 804. This example illustrates how two different frames, frames C and F, having the same priority level PL1 assigned by the transmitter 802 are assigned different dynamic reception priority levels in the receiver 804, with the particular dynamic reception level assigned being determined dynamically as a function of the frames currently being received by receiver.

It is to be understood that even though various embodiments and advantages of the present invention have been set forth in the foregoing description, the above disclosure is illustrative only, and changes may be made in detail, and yet remain within the broad principles of the invention. Therefore, the present invention is to be limited only by the appended claims.

## Claims

1. A method of providing multiple quality of service (QOS) levels over a single asynchronous transfer mode (ATM) virtual communications channel, the method comprising:
assigning a priority level to each frame to be communicated over the ATM virtual communications channel, each assigned priority level defining the QOS level of the corresponding frame;
monitoring the priority levels of frames to be communicated;
adapting each frame into a corresponding sequence of ATM cells, the frames being adapted according to the assigned priority levels of the frames;
interrupting the adaptation of particular frames according to the monitored priority levels;
resuming the adaptation of interrupted frames according to the monitored priority levels;
providing an indication of when the adaptation of any frame has been interrupted and resumed;
communicating the ATM cells over the ATM virtual communications channel according to the order the cells are adapted; and
reassembling the communicated ATM cells into the corresponding frames using the provided indications of when the adaptation of particular frames has been interrupted and resumed to thereby reassemble the frames according to the assigned priority levels of the frames and in this way achieve the desired QOS levels of the frames.

2. The method of claim 1 wherein assigning a priority level to each frame comprises storing the frame in one of a plurality of queues, each queue having an associated priority level.

3. The method of claim 1 wherein interrupting the adaptation of particular frames according to the monitored priority levels comprises transmitting a final ATM cell of a segment of a first frame to thereby interrupt adaptation of the first frame when the monitored priority levels indicate a second frame having a higher priority than the first frame is to be transmitted.

4. A method of providing multiple quality of service (QOS) levels over a single asynchronous transfer mode (ATM) virtual communications channel, the method comprising:
assigning a priority level to each frame to be communicated over the ATM virtual communications channel, each assigned priority level defining the QOS level of the corresponding frame;
adapting the frames into a corresponding sequence of ATM cells according to the assigned priority levels of the frames, the adaptation of a particular frame being interrupted when a frame having a higher priority level is to be communicated and the adaptation of any such interrupted frame being resumed when no higher priority level frames are to be communicated, and any such interruption and resumption of frames being indicated in the sequences of ATM cells; and
communicating the ATM cells over the ATM virtual communications channel according to the order the cells are adapted to thereby communicate the frames according to their corresponding priority levels and achieve the defined QOS levels for the frames.

5. The method of claim 1 or claim 4 wherein providing an indication of when the adaptation of any frame has been interrupted and resumed comprises setting bits contained in a CPCS-UU field contained in a trailer segment of a corresponding protocol data unit.

6. The method of claim 5 wherein the CPCS-UU field comprises an TNT bit that indicates the transmission of a current frame has been interrupted in order to begin transmission of a higher priority frame and an EOF bit that indicates the end of the corresponding frame and thus the resumption of the transmission of the prior lower priority frame.

7. The method of claim 6 wherein the CPCS-UU field further comprises an EOF0 bit that is set to periodically synchronize transmission and reception of frames, and a segment counter field that indicates a segment number of the corresponding protocol data unit for detecting segments lost during transmission.

8. The method of claim 4 wherein adapting the frames comprises adapting the frames into dynamic fragment unit protocol data units (DFU PDU) that are compatible with conventional AAL5 PDUs but includes indications of when adaptation of a frame has been interrupted and resumed.

9. A method of communicating information over an asynchronous transfer mode (ATM) communications network, the method comprising:
queuing a plurality of frames, each frame being queued in a manner to assign a corresponding priority level to the frame;
retrieving a portion of a current frame from the corresponding queue, forming a corresponding ATM cell, and transmitting the ATM cell over the ATM communications network;
detecting when a queued frame has a priority level greater than the current priority level;
continuing retrieving, forming, and transmitting the current frame until a frame having a higher priority level is detected or until a portion of the current frame less than a predetermined size remains in the queue;
when the portion of the current frame is less than the predetermined size, retrieving the portion and forming a corresponding ATM termination cell including a priority level field indicating transmission of a the current frame has been completed;
when a frame having a higher priority level is detected, retrieving a portion of the current frame and forming a corresponding ATM interruption cell including a priority level field indicating transmission of the current frame is being interrupted and that transmission of a higher priority frame will start with the subsequent ATM cell;
retrieving a portion of the higher priority frame from the corresponding queue, forming a corresponding ATM cell, and transmitting the ATM cell over the ATM communications network; and
continuing the operations of retrieving, forming, and transmitting the higher priority frame until a frame having a higher priority level is detected or until a portion of the higher priority frame less than a predetermined size remains in the queue.

10. The method of claim 9 wherein the priority level field comprises a CPCS-UU field including an INT bit that is set in an interruption ATM cell to indicate a frame currently being transmitted has been interrupted in order to begin transmission of a higher priority frame, and an EOF bit that is set in a termination ATM cell to indicate the end of the corresponding frame.

11. An asynchronous transfer mode (ATM) communications system, comprising:
a transmitter adapted to receive a plurality of frames, each frame containing data having an associated priority level, and the transmitter operable to monitor the priority levels of the frames and adapt each frame into at least one corresponding dynamic fragment unit protocol data unit (DFU PDU) as a function of the monitored priority levels, the transmitter operable to transmit each frame as a series of DFU PDUs, the timing of when each DFU PDU belonging to a particular frame is transmitted being determined by the priority levels of the plurality of frames to be transmitted, and each DFU PDU including a priority level field including termination information indicating whether the DFU PDU is the last PDU belonging to a given frame and including interruption information indicating whether the subsequent DFU PDU belongs to a frame having a higher priority level; and
a receiver adapted to receive the DFU PDUs from the transmitter, the receiver operable to monitor the priority level field of each DFU PDU and generate from the priority level field a dynamic reception priority level that is assigned to each frame being received, the receiver reassembling each series of DFU PDUs into the corresponding frame using the dynamic reception priority level, and the receiver adjusting the dynamic reception priority level responsive to the interruption and termination information contained in each DFU PDU.

12. The system of claim 11 wherein the transmitter comprises:
a plurality of packet queue circuits, each packet queue circuit storing corresponding frames and having an associated queue number corresponding to the priority level of frames stored in the packet queue circuit; and
a dynamic fragmentation layer module, including,
a LIFO register containing a plurality of storage locations, each storage location storing a queue number;
a fragment counter operable to generate a fragment count responsive to a control signal;
a queue prioritization and monitoring module coupled to the packet queue circuits, the queue prioritization and monitoring module operable to monitor the packet queues and determine a highest queue priority number corresponding to the active queue circuit having the highest priority, and also operable to determine whether there is at least one packet queue circuit containing a new frame; and
a payload generator coupled to the packet queue circuits, queue prioritization and monitoring module, and the fragment counter, the generator operable to pull the last queue number stored in the LIFO register, determine whether the highest queue priority number is greater than the last queue number, and generate an interrupt ATM cell when the highest queue priority number is greater than the last queue number, and to generate a termination or full ATM cell when the highest queue priority number is not greater than the last queue number, the payload generator also placing the fragment count in each ATM interrupt and termination cell and applying the control signal to increment the count thereafter.

13. The system of claim 11 wherein the receiver comprises:
a plurality of packet queue circuits, each packet queue circuit storing corresponding frames and having an associated queue number corresponding to the priority level of frames stored in the packet queue circuit;
a priority level state machine circuit coupled to the receive the priority level field each received DFU PDU and operable to generate payload routing control signals responsive to the priority level field; and
a payload routing module coupled to the state machine circuit to receive the payload routing control signals and operable to the route the payload of each DFU PDU to a corresponding packet queue responsive to the controls signals.
